# EUROPEAN PATENT APPLICATION

(11) **EP 3 954 648 A1**
(43) Date of publication of application: **16.02.2022**
(21) Application number: 20191146.8
(22) Date of filing: 14.08.2020
(51) Int. Cl.: B67B 3/00

(54) **CONVEYING DEVICE FOR RECEPTACLE CLOSURES, AND STERILIZATION SYSTEM FOR RECEPTACLE CLOSURES**

(71) Applicant: Sidel Participations, 76930 Octeville-sur-Mer (FR)
(72) Inventor: BERNINI, Stefano, 43126 Parma (IT)
(74) Representative: Sidel Group

(57) **Abstract**

Conveying device (3) for advancing receptacle closures (2) along an advancement path comprising: - a tube (7) extending along a longitudinal axis (A); - at least one helical guide (8) arranged within and tangential to the main tube (7), said helical guide (8) being coaxial to said tube (7) and defining a helical shape of said advancement path. The device (1) is configured to generate a rotation of the tube (7) around the axis (A) and with respect to the guide (8), so as to maintain the receptacle closures (2) against an inner lateral surface (10) of the tube (7) by centrifugal force and simultaneously advance the receptacle closures (2) along the helical advancement path through interaction with the guide (8).

## Description

### TECHNICAL FIELD

The present invention relates to a conveying device for receptacle closures, in particular receptacle closures for receptacles being filled with a pourable product.

Advantageously, the present invention also relates to a sterilization system for receptacle closures, in particular receptacle closures for receptacles being filled with a pourable product.

### BACKGROUND ART

The sterilization of packaging material, in particular within the food packaging sector, is of fundamental interest for guaranteeing the needed shelf life of the packaged products and, accordingly, the safety of the consumers. This is even more important when food products are packaged under aseptic conditions.

It is known in the art to fill any type of pourable product, in particular any type of pourable food product such as carbonated liquids (e.g. sparkling water, soft drinks and beer), non-carbonated liquids (including still water, juices, teas, sport drinks, wine, etc) and beverages containing pulps into receptacles, such as containers, vessels, jars and bottles made of base components, like glass, plastics, aluminum, steel, and composites.

In general, the receptacles prior to being filled with the pourable product are sterilized within a receptacle sterilization system and are subsequently filled with the desired pourable product within a filling apparatus.

After the filling of the receptacles, typically the respective pouring openings of the receptacles are closed by the application and fastening of respective receptacle closures.

Prior to the application of the receptacle closures, the receptacle closures must be sterilized within a sterilization system. After sterilization the sterile receptacle closures are fed to a capping system, which also receives the filled receptacles.

A typical sterilization system for receptacle closures comprises a conveying device having a guide housed within an isolation chamber. The guide is designed to receive the receptacle closures at an inlet station and to guide the receptacle closures to an outlet station from where the receptacle closures are fed to a capping system. The receptacle closures are arranged in succession to one another within and/or the guide.

A typical conveying device also comprises an actuation unit for advancing the receptacle closures along an advancement path from the inlet station to the outlet station. The actuation unit comprises a pushing element, which is configured to insert one receptacle closure at a time into the guide, thereby bringing into contact the newly fed receptacle closure with the succession of receptacle closures already present within the guide. A typical succession of receptacle closures comprises between 20 to 200 receptacle closures. This leads to the exertion of a pushing force onto the succession of receptacle closures for advancing the receptacle closures along the advancement path.

Typically, the guide is formed by a plurality of elongated bars spaced apart from one another and delimiting an advancement space within which the receptacle closures advance.

Furthermore, a typical sterilization system further comprises a sterilization unit configured to inject a sterilization agent into a sterilization zone of the isolation chamber.

In order to improve the efficiency of the sterilization process the receptacle closures are pre-heated prior to being exposed to the sterilization agent.

Furthermore, a typical sterilization system comprises a drying device adapted to direct heated air to the receptacle closures for drying off the sterilization agent residues from the receptacle closures prior to exiting the isolation chamber, so as to feed a receptacle closure devoid of any residues of the sterilization agent to the capping system.

A drawback of such known sterilization systems, in particular the conveying device, resides in the lacking possibility of adopting its processing velocities in dependence of the processing conditions of the capping system.

A further drawback of such known sterilization systems is that due the increased temperatures of the receptacle closures, the receptacle closures are more susceptible to deformations due to the forces acting within the succession of receptacle closures.

An even other drawback of such known sterilization systems is that the guides are only adapted to guide a limited number of types and/or formats of receptacle closures. Meaning that either the sterilization apparatuses, in particular the respective conveying devices, require a plurality of different guides, each guide being adapted to guide advancement of some specific receptacle closure formats and/or types or during a format change the guide needs to be modified such to be adapted to advance the new format and/or type of receptacle closure.

Another drawback resides in that it may occur during a required stop of the conveying device that the receptacle closures present within the conveying device may fuse to one another due to the relatively high temperatures present within the conveying device.

Therefore, it is the desire to further improve the known conveying devices and/or the known sterilization systems.

### DISCLOSURE OF INVENTION

It is therefore an object of the present invention to provide in a straightforward and low-cost manner a conveying device for receptacle closures for overcoming at least one of the above-mentioned drawbacks.

It is a further object of the present invention to provide in a straightforward and low-cost manner an improved sterilization system for receptacle closures for overcoming at least one of the above-mentioned drawbacks.

According to the present invention, there is provided a conveying device according to the independent claim.

Further advantageous embodiments of the conveying device are specified in the device claims being directly or indirectly depending on the device independent claim.

Advantageously and according to the present invention, there is also provided a sterilization system for sterilizing receptacle closures according to the independent system claim. Further advantageous embodiments of the system are specified in the system claims being directly or indirectly depending on the system independent claim.

The following brief description of the drawings and detailed description refer to a possible exemplary embodiment of a sterilizing system according to present description. In the following, said possible exemplary embodiment of the sterilizing system will be defined as "system".

The following brief description of the drawings and detailed description refer to a possible exemplary embodiment of a conveying device according to present description. In the following, said possible exemplary embodiment of the conveying device will be defined as "device".

### BRIEF DESCRIPTION OF THE DRAWINGS

A non-limiting embodiment of the present invention will be described by way of example with reference to the accompanying drawings, in which:
Figure 1 is a perspective view of the system including the device, with parts removed for clarity;
Figure 2 is a perspective bottom view of a portion of the system, with parts removed for clarity;
Figure 3 is a perspective and partially sectioned view of some details of the system, with parts removed for clarity;
Figure 4, is a perspective view of some details of the device, with parts removed for clarity;
Figure 5 is a partially sectioned perspective view of some further portions of the device, with parts removed for clarity;
Figure 6 is an enlarged perspective view of some other details of the device, with parts removed for clarity;
Figure 7 is an enlarged perspective view of another detail of the device, with parts removed for clarity;
Figure 8 is an enlarged perspective view of a even other details of the device, with parts removed for clarity; and
Figure 9 is a perspective and partially sectioned view of some further portions of the system, with parts removed for clarity.

### BEST MODES FOR CARRYING OUT THE INVENTION

The system is indicated with 1. The device is indicated with 3. The system 1 comprises the device 3. The system 1 is configured for sterilizing receptacle closures. The closures are indicated with 2. The device 3 is configured for advancing receptacle closures 2 along an advancement path.

Receptacle closures 2 may be of any type, such as crown corks, screw caps, sports caps, stoppers or similar, and they may be produced from a variety of materials such as plastics, cork and metal. It is further known that the receptacle closures 2 may vary in format and/or size.

In the figures, the receptacle closures 2 are threaded receptacle closures 2, in particular plastic screw caps, to be screwed onto receptacles. However, it must be clear that the present invention may be also used to particular advantage for any other type of receptacle closures 2 such as crown corks, sports caps, stoppers and others made also from materials different from plastic, such as metal or cork.

Preferentially, receptacle closures 2 are configured to be applied to receptacles, such as bottles, jars, cans, vessels, containers or the like, in particular being made of base components, like glass, paper or cardboard, plastics, aluminum, steel, and composites. Even more preferentially, the receptacles are fillable or are filled with a pourable product, e.g. pourable food products such as carbonated liquids (e.g. sparkling water, soft drinks and beer) or non-carbonated liquids (e.g. still water, juices, teas, sport drinks, liquid cleaners, wine, emulsions, suspensions, high viscosity liquids and beverages containing pulps, edible oil) or non-liquid food products (e.g. salt, sugar or the like) or pourable non-food products such as mineral oil, detergents and the like.

In general, the closures 2 can be of any type and can be configured to be applied to any type of receptacle or container.

The device 3 comprises a tube 7 extending along a longitudinal axis A.

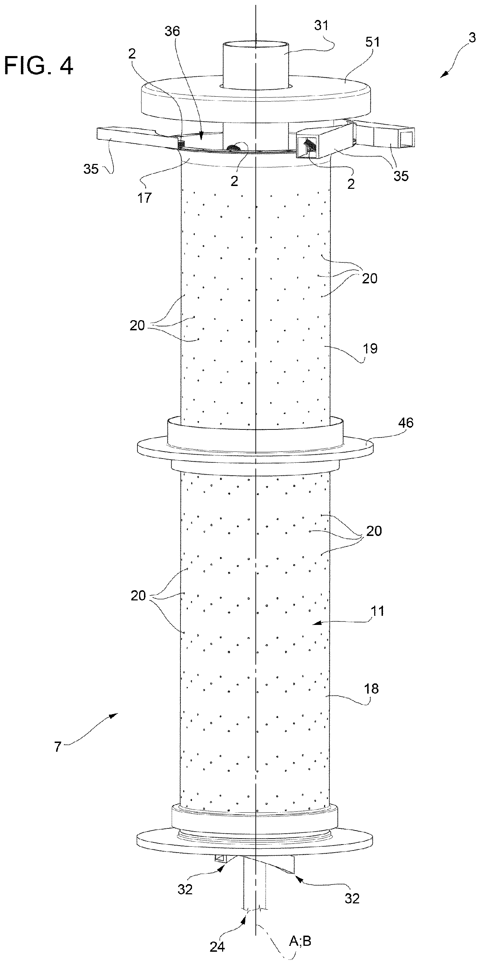

The tube 7 is indicated in Figure 4.

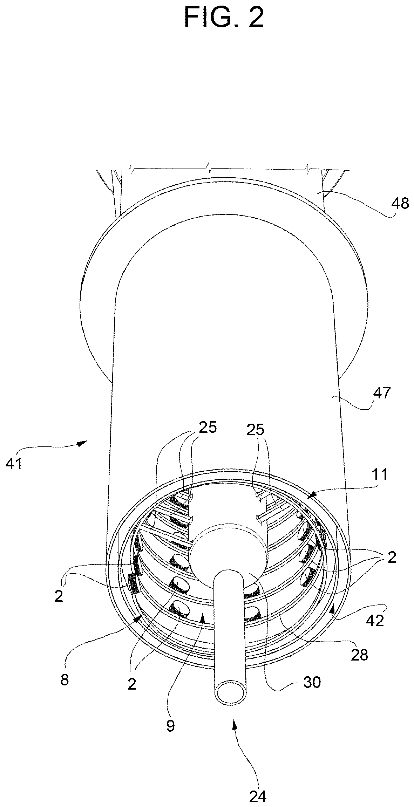

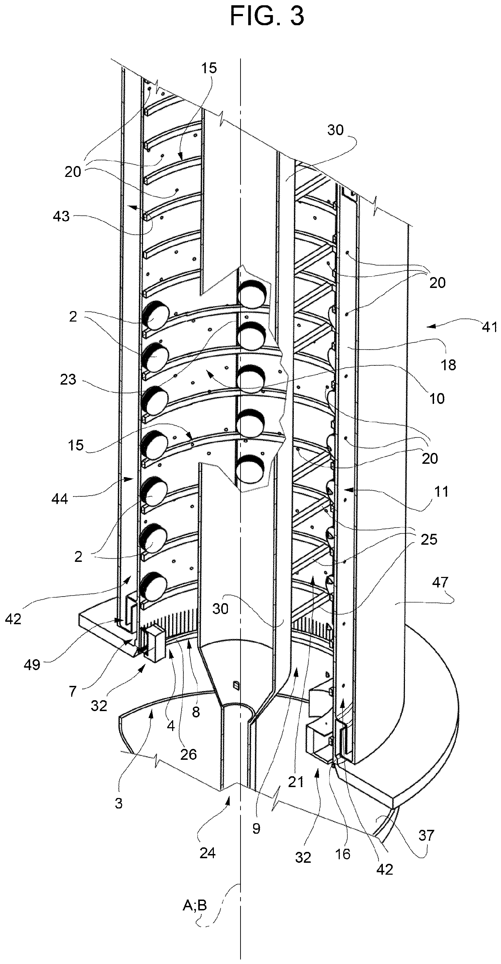

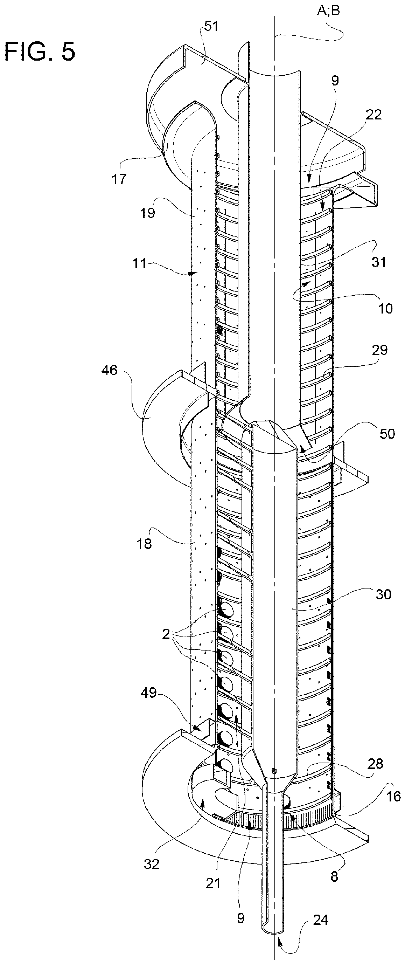

The tube 7 comprises or defines an inner lateral surface 10 delimiting an inner space 9 of the tube 7. The inner surface 10 of the tube 7 is indicated in Figures 3 and 5. The inner space 9 of the tube 7 is indicated in Figures 2, 3 and 5. The inner lateral surface 10 is defined on a lateral wall of the tube 7. The lateral wall surrounds the longitudinal axis A.

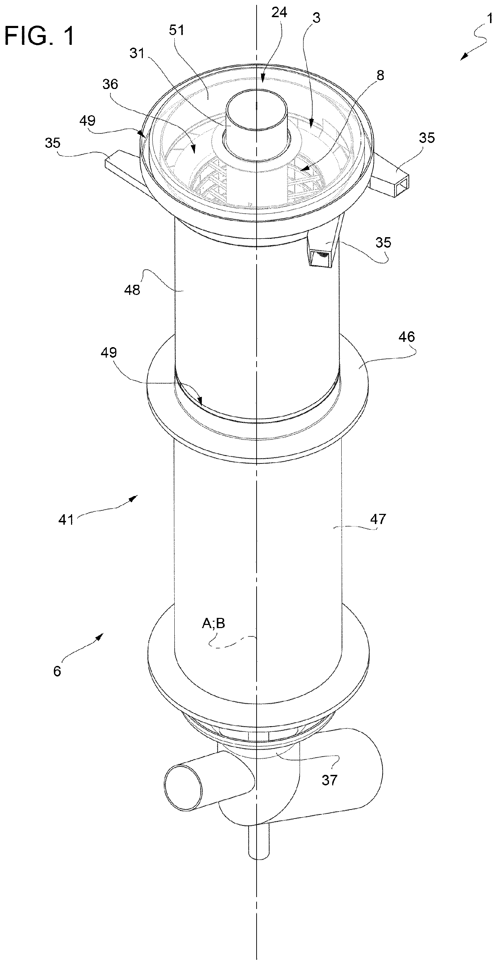

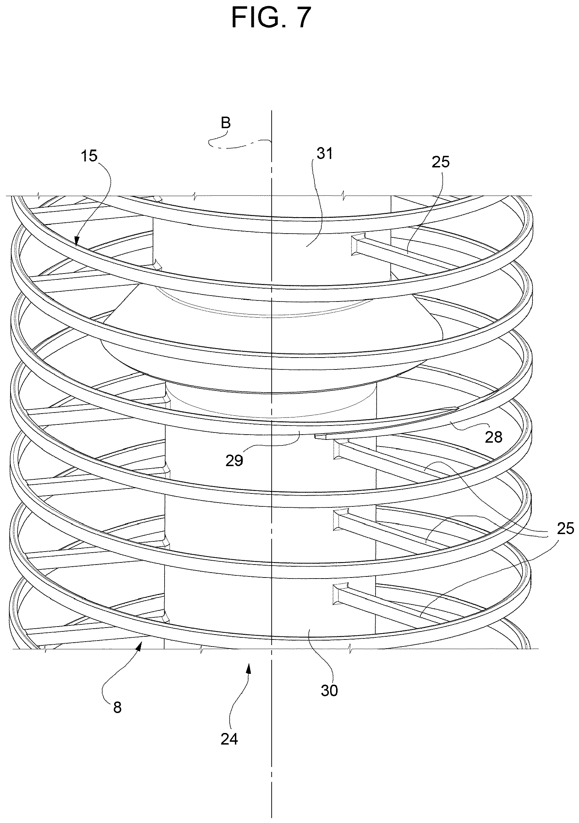

The device 3 comprises a helical guide 8. The guide 8 is arranged within and tangential to the main tube 7. The guide 8 is coaxial to said tube 7. The guide 8 defines a helical shape of said advancement path. The guide 8 is indicated in Figures 1, 2, 3, 5, 6, 7 and 8. An axis B of the guide corresponds to the longitudinal axis A. The axes A and B are indicated in Figures 1, 3 and 4.

The guide 8 is located in the inner space 9 and is tangential to the inner surface 10.

The device 3 is configured to generate a rotation of the tube 7 around the axis A and with respect to the guide 8. The device 3 is configured so that the rotation of the tube 7 is characterized by an angular speed of the tube 7 with respect to the guide 8 and around the longitudinal axis A. The device 3 is configured to control said angular speed such to guarantee that the centrifugal force is sufficient to maintain closures 2 in contact with inner surface 10 of the tube 7.The rotation is generated so as to maintain the receptacle closures 2 against the inner surface 10 of the tube 7 by centrifugal force and simultaneously advance the receptacle closures 2 along the helical advancement path through interaction with the guide 8.

The helical shape of the guide 8 allows for increasing the distance covered by the closures 2 at constant longitudinal extension or footprint of the device 3.

Moreover, if the longitudinal axis A extends at least mainly along the gravity, in case a problem occurs which requires an emergency discharge of the closures 2 to avoid the damaging of the closures 2 or other negative consequence, the closures 2 can fall along the tube 7 by reducing or stopping the said rotation of the tube 7.

Moreover, it is avoided the risk that a mechanical problem in conveying one of the closures along the advancement path affects the conveying also of the other closures. In fact, if there is a problem regarding the conveying of one closure, the closure will most probably fall down in the tube 7 without affecting the conveying of the other closures.

Moreover, the changeover between different types of closure, for example differing for the size or format or shape, can be easier as the guide 8 and the tube 7 are adapted for the conveying of a very broad range of formats and/or sizes and/or types of the closures. However, upon a variation of the closure type, it is possible that only an adjustment of the angular speed of the tube 7 is needed.

The tube 7 comprises a first tube portion 18 and a second tube portion 19. The second tube portion 19 is located downstream of the first tube portion 18 along the advancement path. The first tube portion 18 and the second tube portion 19 are mechanically independent from each other. The first tube portion 18 and the second tube portion 19 are indicated at least in Figures 4 and 5.

The guide 8 comprises a first guide portion 28 and a second guide portion 29. The first guide portion 28 is arranged within and tangential to the first tube portion 18. The second guide portion 29 is arranged within and tangential to the second tube portion 19. The second guide portion 29 is located downstream of the first guide portion 28 along the advancement path. The first guide portion 28 is indicated at least in Figures 2, 5, 6, 7, 8. The second guide portion 29 is indicated at least in Figures 5, 7 and 8.

The device 3 is configured to differentiate between each other the angular speed of the first tube portion 18 with respect to the first guide portion 28 and the angular speed of the second tube portion 19 with respect to the second guide portion 29. In this way, if for example the angular speed of the first tube portion 18 with respect to the first guide portion 28 is greater than the angular speed of the second tube portion 19 with respect to the second guide portion 29, the closures can be accumulated in the second tube portion 19.

The system 1 is configured to inject a sterilization agent in at least the first tube portion 18 of the tube 7. Therefore the closures are sterilized while they are advancing along the first guide portion 28. That is, the first tube portion 18 defines, inside the first tube portion 18, a sterilization zone 21 for sterilizing the closures 2 while they are advancing along the first guide portion 28. The sterilization zone 21 is indicated in Figures 3 and 5. The sterilization zone 21 corresponds to a first part of the inner space 9 of the tube 7.

The sterilization agent can be hydrogen peroxide or ozone or another kind of suitable sterilization agent.

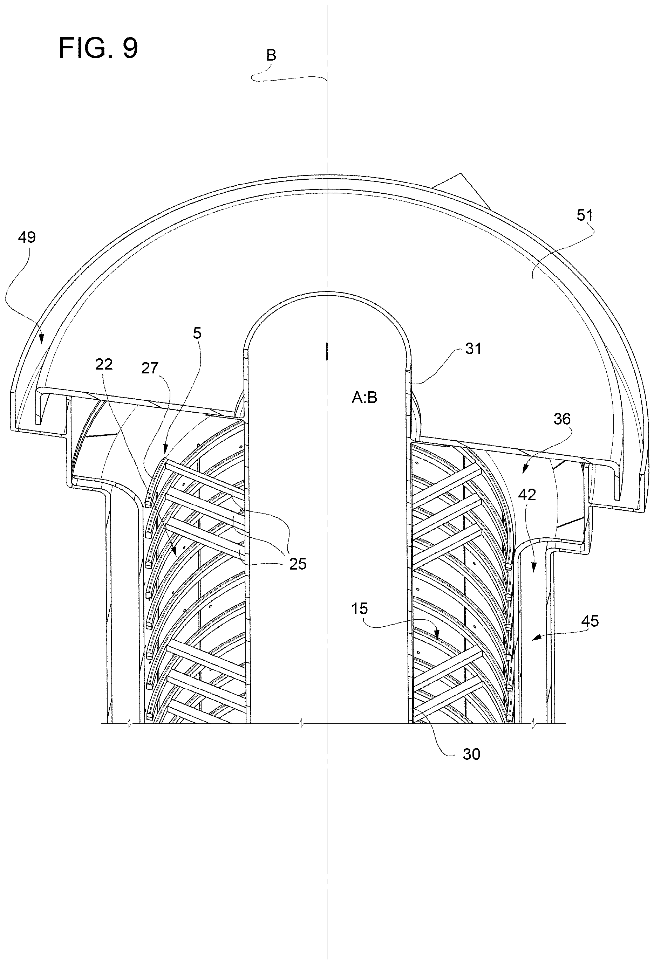

The system 1 is configured to inject a drying agent in the second tube portion 19. Therefore the closures are dried while they are advancing along the second guide portion 29. That is, the second tube portion 19 defines, inside said second tube portion 19, a drying zone 22 for the drying o the closures while they are advancing along the second guide portion 29. The drying zone 22 is indicated in Figures 5 and 9. The drying zone 22 corresponds to a second part of the inner space 9 of the tube 7. Said second part is located downstream of the first part of the inner space 9 along the advancement path. The drying agent can be air or heated air or another suitable drying agent.

In this way, by differentiating from each other the angular speed of the first tube portion 18 with respect to first guide portion 28 and the angular speed of the second tube portion 19 with respect to second guide portion 29, in the case the machine operating downstream of the system 1 or of the device 3 cannot temporarily receive the closures from the system 1 or the device 3, the closures can be accumulated in the drying zone 22, to avoid an excessive exposure of the closures 2 to the sterilizing agent. In this way an accumulation mode of the system 1 or of the device 3 is defined. The system or the device is therefore configured for operating selectively in a normal mode, wherein the angular speed of the second tube portion 19 around longitudinal axis A and with respect to the second tube portion 29 and the angular speed of the first tube portion 18 around longitudinal axis A and with respect to the first tube portion 28 are equal, and in an accumulation mode, wherein said angular speeds are different from each other. The accumulation mode occurs after the normal mode.

The device 3 is configured to make at least the second guide portion 29 integral with the rotation at least of the second tube portion 19, after the tube 7 has been rotating with respect to the guide 8 with different angular speeds respectively of the second tube portion 19 with respect to the second guide portion 29 and of the first tube portion 18 with respect to the first guide portion 28. In this way, after the accumulation mode of the system 1 or of the device 3, the accumulated closures 2 can be maintained or kept in the drying zone 22 as long as the machine operating downstream of the system 1 cannot receive the closures. Therefore the device 3 or the system 1 is configured to operate, after the accumulation mode, in a keeping mode, wherein the second guide portion 29 is integral with the rotation of the second tube portion 19.

The first guide portion 28 and the second guide portion 29 are mechanically independent from each other. The device 3 is configured to generate a rotation of the first tube portion 18 with respect to the first guide portion 28 and around the longitudinal axis A while the second guide portion 29 is integral with the rotation of the second tube portion 19.

In this way, while the device 3 or the system 1 is operating in the keeping mode, the first tube portion 18 can start receiving closures again, before the downstream machine can start receiving closures again. Therefore, it is increased the productivity of the device 3 or of the system 1 configured for operating selectively in the normal mode, in the accumulation mode and in the keeping mode.

The device 3 is configured to convey the closures from an input station 4 configured for receiving the closures to be conveyed, to an output station 5 for outputting the conveyed closures.

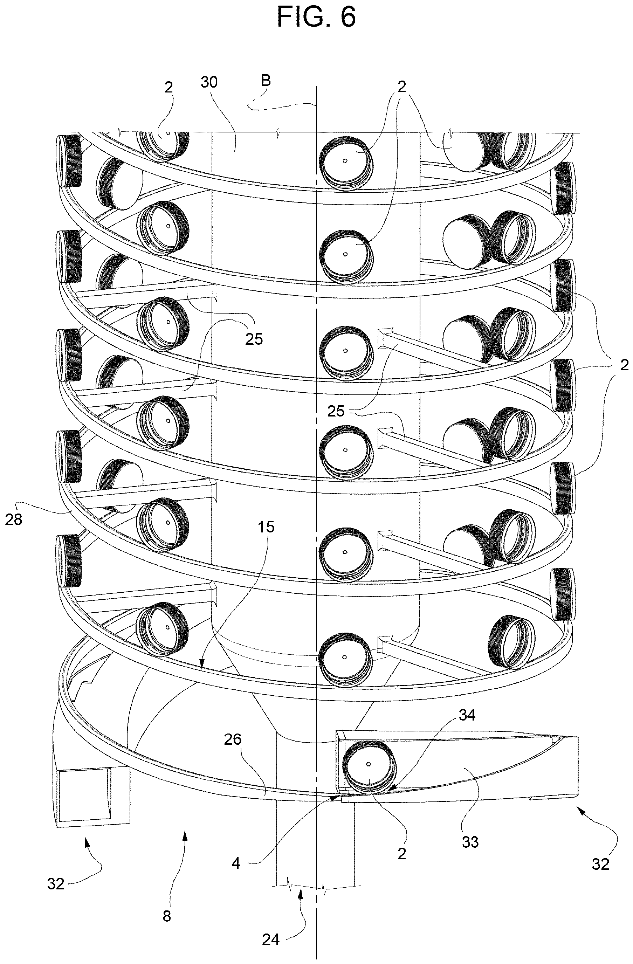

The input station 4 comprises a first longitudinal end 26 of the guide 8. The first end 26 of the guide 8 is for receiving the closures to be conveyed. The input station 4 comprises a first longitudinal end portion 16 of the tube 7. The first end 26 of the guide 8 is located at the first end portion 16 of the tube 7. The first end 26 of the guide 8 is indicated in Figures 3 and 6. The first end portion 16 of the tube 7 is indicated in Figures 3 and 5.

The output station 5 comprises a second longitudinal end 27 of the guide 8. The second end 27 of the guide 8 is longitudinally opposite to the first end 26 of the guide 6. The output station 5 comprises a second longitudinal end portion 17 of the tube 7. The second end 27 of the guide 8 is in communication with the second end portion 17 of the tube 7 to input the guided closures in the second end portion 17 of the tube 7. The second end portion 17 of the tube 7 is longitudinally opposite to the first end portion 16 of the tube 7. The second end 27 of the guide 8 is indicated in Figure 9. The second end portion 17 of the tube 7 is indicated in Figures 4 and 5.

The first end 26 of the guide 8 is defined by the first guide portion 28. The second end 27 of the guide 8 is defined by the second guide portion 29. The first end portion 16 of the tube 7 is defined by the first tube portion 18. The second end portion 17 of the tube 7 is defined by the second tube portion 19.

The input station 4 comprises an input channel 32. The input channel 32 is in communication with the first end 26 of the guide 8 to input the closures to be conveyed in the first end 26 of the guide 8. The input channel 32 is indicated in Figures 3, 4, 5 and 6.

The output station 5 comprises an output channel 35. The output channel 35 in communication with the second end portion 17 of the tube 7 to output the conveyed closures from the conveying device 1. The output channel is indicated in Figures 1 and 4.

The second end portion 17 of the tube 7 defines a flaring shaped sector 36 of the inner surface 10 of the tube 7. for moving, upon rotation of at least said second end portion 17 of the tube 7 with respect at least to said second end 17 of the guide 8 and around the longitudinal axis A, the guided closures from the second end 27 of the guide 8 up to the output channel 35.

The flaring shaped portion 36 serves to generate a movement of the guided closures from the guide 8 to the output channel 35, which movement comprises at least a radial component with respect to the axis A. In this way it is reduced the mechanical complexity of the components aimed to output the closures 2 from the device 3 or from the system 1.

The device 3 comprises a support bar or shaft 24. The support shaft 24 passes longitudinally through the tube 7. The shaft 24 extends longitudinally along the longitudinal axis A. The supporting shaft is indicated in Figures 1, 2, 3, 5, 6, 7, and 8.

The device 3 comprises a plurality of arms 25 extending at least radially with respect to the longitudinal axis A to structurally connect the shaft 24 with the guide 8. The arms 25 are indicated in Figures 2, 6, 7 and 8.

The supporting shaft 24 supports the guide 8 by means of the arms 25.

The shaft 24 comprises a first shaft portion 30 and a second shaft portion 31. The first shaft portion 30 supports the first guide portion 28. The second shaft portion 31 supports the second guide portion 29. The second shaft portion 31 is located downstream of the first shaft portion 30 with respect to said advancement path. The first shaft portion 30 passes longitudinally through the first tube portion 18. The second shaft portion 31 passes longitudinally through the second tube portion 19. The first shaft portion 30 is indicated in Figures 2, 3, 5, 7, 8. The second shaft portion 31 is indicated in Figures 1, 4, 5, 7, 8 and 9.

The device 3 is configured is configured to make at least the second guide portion 29 integral with the rotation at least of the second tube portion 19 by rotating at least said second portion 31 of said shaft 24 around said axis A. The arms 25 serve to couple the second guide portion 29 with the rotation of the second shaft portion 31. In this way mechanical complexity of the device 3 is reduced as the same component, that is the second shaft portion 31, is used both for supporting the second guide portion 29 and for making, in the keeping mode, integral the second guide portion 29 with the rotation of the second tube portion 19.

If the first guide portion 28 and the second guide portion 29 are mechanically independent from each other, it is possible that the first shaft portion 30 and the second shaft portion 31 are mechanically independent from each other.

If the first guide portion 28 and the second guide portion 29 are not mechanically independent from each other, it is possible that also the first shaft portion 30 and the second shaft portion 31 are not mechanically independent from each other. In this latter case, the device 3 is configured to make the guide 8 integral with the rotation of the tube 7 by rotating said shaft 24 around said axis A. The arms 25, in this latter case, serve to couple the guide 8 with the rotation of the shaft 24.

The system 1 comprises an outer tubular shell 41. The outer shell 41 encloses the tube 7. The tube 7 and the outer shell 41 define between the tube 7 and the outer shell 41 a chamber 42. The shell 41 is indicated in Figures 1, 2, 3. In Figures 4 and 5 the tube 7 is showed without the outer shell 41 enclosing the tube. The chamber 42 is indicated in Figures 2, 3 and 9. The chamber 42 surrounds the tube 7. The tube 7 comprises or defines an outer surface 11. The outer surface 11 is opposed to inner space 9. That is, the outer surface 11 faces away from inner space 9. The outer surface 11 is located on the opposite side of the lateral wall of the tube 7 with respect to inner surface 9. The outer surface 11 is indicated in Figures 2, 3, 4 and 5. The chamber 42 is delimited radially with respect to longitudinal axis A by the outer surface 11 of the tube 7 and by an inner surface of the outer tubular shell 41. The chamber 42 is an annular chamber.

The system 1 comprises a plurality of through holes 20 on the lateral wall of the tube 7. The holes 20 are made through the lateral wall of the tube 7. Each of the holes 20 extends from the outer surface 11 to the inner surface 10 of the tube 7.

The system 1 is configured to inject said sterilization agent in said sterilization zone 21 fluidically through the chamber 42 and the holes 20. The system 1 is configured to inject said drying agent in the drying zone 22 fluidically through said chamber 42 and said holes 20.

The chamber 42 surrounds the tube 7.

The holes 20 and the chamber 42 provides a very efficient channeling for introducing the sterilization agent in the sterilization zone 21 and/or the drying agent in the drying zone 22. The tube 7 is substantially a circular cylinder. The outer shell 41 is substantially a circular cylinder. The helical shape of the guide 8, the circular shape of the tube 7 and the circular shape of the outer shell 41 allow for defining the efficient channeling comprising the chamber 42, which can be annular, and the holes 20 in the lateral wall of the tube 7, for optimizing the diffusion of the sterilization agent in the sterilization zone 21 and/or o the drying agent in the drying zone 22 in compliance with a high compactness of the device 3.

The system 1 is configured to heat said sterilization zone 21 thermally through said first shaft portion 30. In this way mechanical complexity of the device 3 is reduced as the same component, that is the first shaft portion 30, is used both for supporting the first guide portion 29 and for heating the sterilization zone 21.

The system 1 is configured to aspirate at least said sterilizing agent from the sterilization zone 21 fluidically through said second shaft portion 31. In this way mechanical complexity of the device 3 is reduced as the same component, that is the second portion 31, is used both for supporting the second guide portion 29 and for aspirating the sterilization agent from the sterilization zone 21.

The system 1 is configured to aspirate at least said drying agent from the drying zone 22 fluidically through said second shaft portion 31. In this way mechanical complexity of the device 3 is reduced as the same component, that is the second shaft portion 31, is used both for supporting the second guide portion 29 and for aspirating the drying agent from the drying zone 22.

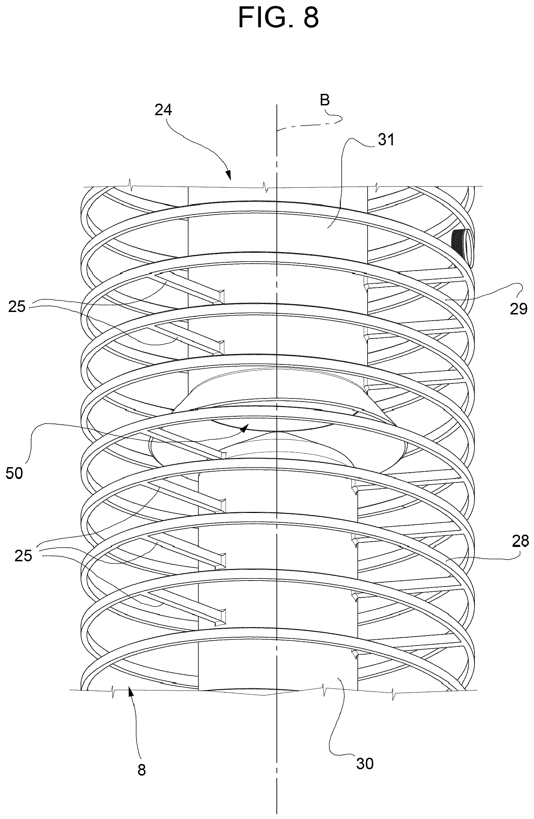

To those ends, the second shaft portion 31 defines a hole 50 for aspirating said sterilization agent and/or said drying agent. The hole 50 is indicated in Figures 5 and 8.

The hole 50 is in the form of a hood and/or is located at a longitudinal end of the second shaft portion 31, which longitudinal end is faced to the first shaft portion 30. The hole 50 is in communication with the sterilization zone 21 and/or with the drying zone 22. The location and/or the shape of the hole 50 allow the use of the second shaft portion 31 for aspirating very efficiently the sterilization agent from the sterilization zone 21. Moreover, the location and/or the shape of the hole 5 allow the use of the second shaft portion 31 both for aspirating the sterilization agent and the drying agent.

The system 1 comprises a closing cap 51 arranged on outer shell 41. The closing cap 51 is indicated in Figures 1, 4, 5, and 9.

The outer shell 41 comprises a first outer shell portion 47 and a second outer shell portion 48 which is located downstream of the first outer shell portion 47 with respect to the advancement path. The first outer shell portion 47 encloses the first tube portion 18 and the second outer shell portion 48 encloses the second tube portion 19. The first outer shell portion 47 is indicated in Figures 1, 2, and 3. The second outer shell portion 48 is indicated in Figures 1 and 2.

The chamber 42 comprises a first portion 44 of the chamber 42 and a second portion 45 of the chamber 42 which is located downstream of the first chamber portion 44 with respect to the advancement path. The first portion 44 of the chamber 42 surrounds the first tube portion 18 and the second portion 45 of the chamber 42 surrounds the second tube portion 19. The first outer shell portion 47 and the first tube portion 18 defines between them the first chamber portion 44. The second outer shell portion 48 and the second tube portion 19 define between them the second chamber portion 45. The first portion 44 of the chamber 42 is indicated in Figure 3. The second portion 45 of the chamber 42 is indicated in Figure 9.

The system 1 is configured to inject said sterilization agent in said sterilization zone 21 fluidically through the first portion 44 of the chamber 42 and the holes 20 made through the first tube portion 18. The system 1 is configured to inject said drying agent in the drying zone 22 fluidically through the second portion 45 of the chamber 42 and the holes 20 made through the second tube portion 19.

In this way the system 1 is configured to avoid and/or to reduce the risk of interference between the flow of sterilization agent and the flow of drying agent.

The device 3 can comprise a plurality of input channels 32 angularly spaced between each other and distributed around the longitudinal axis A. The input channels 32 are configured for inputting different respective types of closures. The device 3 can comprise a plurality of output channels 35 angularly spaced between each other and distributed around the longitudinal axis A. The input channels 32 are configured for inputting in the device 3 different respective types of closures. The output channels 35 are configured for outputting from the device 3 different respective types of closures. In general, a type of closures can differ from another type or for at least a format or for at least a size or for at least a material. The device 3 is configured to preliminary rotate the guide 8 around the longitudinal axis A as to select one of the input channels 32 and one of the output channel 35 depending on a selected type of closures to be conveyed or sterilized. The preliminary rotation of the guide 8 occurs before the operation in normal mode of the device 3 or of the system 1.

The tube comprises a plurality of pushing elements 23 protruding inside the inner space 9 and from the inner surface 10. The device 3 is configured to push the closures 2 around the longitudinal axis A during the rotation of the tube 7 with respect to the guide 8 and/or during the rotation of the second tube portion 19 with respect to the second guide portion 29 and/or during the rotation of the first tube portion 18 with respect to the first guide portion 28.

The pushing elements 23 are in form of longitudinal ribs. The ribs 23 are angularly spaced from each other and distributed around longitudinal axis A.

In this way it is improved the control of the treatment time of the closures, that is the time for which the closures remain in the sterilization zone 21 in the normal mode. In fact, the number of spirals of the guide 8 is chosen based on the desired treatment time and on the angular speed of the tube 7 in the normal mode, which angular speed is in turn based on the weight and the geometry of the closure.

The device 3 comprises a plurality of hydrodynamic seal 49 to isolate the inner space 9 of the tube 7 from the outside environment. The hydrodynamic seals are indicated in Figures 1, 3, and 9.

The advantages of the device 3 or of the system 1 will be furtherly clear from the following.

In particular, the device 3 allows advancement of closures 2 avoiding any contact of closures 2 with one another. Therefore, deformation of closures 2 due to any forces acting between neighboring closures 2 are avoided.

A further advantage resides in that the advancement speed is dependent on the specific angular speed of rotation of tube 7, allowing a better control of the advancement speed of closures 2.

Another advantage of device 3 resides in the possibility of buffering or accumulating closures 2 within inner space 9.

An even other advantage of conveying device 3 can be seen in that guide 8 and tube 7 can interact with any type and/or format of closures 2. Thus, a format change does not require a significant workload. It is not necessary to modify tube 7 and/or guide 8. Conveying device 3 only requires to choose the correct input channel 32 and output channel 35.

Another advantage resides in the fact that in case of problems during the operation of other treatment machines of the plant in which the device 3 or the system 1 operates, it is possible to reduce the rotation speed of tube 7 leading to closures 2 loosing contact with inner surface 10 and falling down. Thus, an emergency emptying of inner space 9 is easily possible. This is of particular advantage in order to avoid closures 2 to be subject to significant temperatures.

To this end the device 3 comprises a collecting tank 37 in communication with inner space 9 of the tube 9 to collect the closures 2 which has fallen down from the guide 8 and inside the tube 7 due to an emergency emptying of the tube 7.

Another advantage resides in that due to the presence of through-holes 20 and the angular and linear movement of closures around and along rotation axis A, it is guaranteed that all parts of closures 2 will be exposed to the active agent, avoiding, thus, the presence of any non-sterilized portions.

A further advantage is that supporting shaft 24 is used to carry the active portion of an heating unit. Thus, all the heat is dissipated within inner space 9, leading to an increased efficiency.

The present invention provides a device 3 in the form of a closures feeding tower (capfeed tower) which is very compact, which allows a very easy changeover between different types of closures and an optimal control on the treatment time, and which avoid the risk of damaging or waste closures.

Clearly, changes may be made to device 3 and/or system 1 without, however, departing from the scope of protection as defined in the accompanying claims.

## Claims

1. Conveying device (3) for advancing receptacle closures (2) along an advancement path comprising:
- a tube (7) extending along a longitudinal axis (A);
- at least one helical guide (8) arranged within and tangential to the main tube (7), said helical guide (8) being coaxial to said tube (7) and defining a helical shape of said advancement path;
- the device (3) being configured to generate a rotation of the tube (7) around the axis (A) and with respect to the guide (8), so as to maintain the receptacle closures (2) against an inner lateral surface (10) of the tube (7) by centrifugal force and simultaneously advance the receptacle closures (2) along the helical advancement path through interaction with the guide (8).

2. Device (3) according to claim 1, wherein:
- the tube (7) comprises a first tube portion (18) and a second tube portion (19) located downstream of the first tube portion (18) along the advancement path, the first tube portion (18) and the second tube portion (19) being mechanically independent from each other;
- the guide (8) comprises a first guide portion (28) arranged within and tangential to the first tube portion (18) and a second guide portion (29) arranged within and tangential to the second tube portion (19), the second guide portion (29) being located downstream of the first guide portion (28) along the advancement path;
wherein the device (3) is configured so that said rotation is **characterized by** an angular speed of the tube (7) with respect to the guide (8);
wherein the device (3) is configured to differentiate between each other the angular speed of the first tube portion (18) with respect to the first guide portion (28) and the angular speed of the second tube portion (19) with respect to the second guide portion (29) so as to accumulate the closures in the second tube portion (19).

3. Device (3) according to claim 2, wherein the device (3) is configured to make at least the second guide portion (29) integral with the rotation at least of the second tube portion (19), after the tube (7) has been rotating with respect to the guide (8) with different angular speeds respectively of the first tube portion (18) with respect to the first guide portion (28) and of the second tube portion (19) with respect to the second guide portion (29), so as to maintain the accumulated closures in the second tube portion (19) .

4. Device (3) according to claim 3, wherein:
- the first guide portion (28) and the second guide portion (29) are mechanically independent from each other;
- the device (3) is configured to generate a rotation of the first tube portion (18) with respect to the first guide portion (28) and around the longitudinal axis (A) while the second guide portion (29) is integral with the rotation of the second tube portion (19).

5. Device (3) according to any one of the preceding claims, wherein:
- the device (3) is configured to convey the closures from an input station (4) configured for receiving the closures to be conveyed, to an output station (5) for outputting the conveyed closures;
- the input station (4) comprises a first longitudinal end (26) of the guide (8) for receiving the closures to be conveyed, and a first longitudinal end portion (16) of the tube (7), the first end (26) of the guide (8) being located at the first end portion (16) of the tube (7);
- the output station (5) comprises a second longitudinal end (27) of the guide (8) and a second longitudinal end portion (17) of the tube (7), the second end (27) of the guide (8) being in communication with the second end portion (17) of the tube (7) to input the guided closures in the second end portion (17) of the tube (7), the second end (27) of the guide (8) being longitudinally opposite to the first end (26) of the guide (8), the second end portion (17) of the tube (7) being longitudinally opposite to the first end portion (16) of the tube (7);
- the input station (4) comprises an input channel (32) in communication with the first end (26) of the guide (8) to input the closures to be conveyed in the first end (26) of the guide (8);
- the output station (5) comprises an output channel (35) in communication with the second end portion (17) of the tube (7) to output the conveyed closures from the conveying device (1);
wherein the second end portion (17) of the tube (7) defines a flaring shaped portion (36) of the inner surface (10) of the tube (7) for moving, upon rotation of at least said second end portion (17) of the tube (7) with respect to at least said second end (27) of the guide (8) and around the longitudinal axis (A), the guided closures from the second end (27) of the guide (8) up to the output channel (35) .

6. Conveying device (3) according to any of the previous claims, comprising:
- a supporting shaft (24) passing longitudinally through said tube (7) and extending longitudinally along said longitudinal axis (A);
- a plurality of arms (25) extending at least radially with respect to the longitudinal axis (A) to structurally connect said shaft (24) with said guide (8);
wherein the supporting shaft (24) supports the guide (8) by means of said arms (25).

7. Conveying device (3) according to claim 3 or 4 and according to claim 6, wherein:
- the shaft (24) comprises a first shaft portion (30) supporting the first guide portion (28) and a second shaft portion (31) supporting the second guide portion (29) and located downstream of the first shaft portion (30) with respect to said advancement path, the first shaft portion (30) passing through the first tube portion (18) and the second shaft portion (31) passing through the second tube portion (19);
the device (3) is configured is configured to make at least the second guide portion (29) integral with the rotation at least of the second tube portion (19) by rotating at least said second shaft portion (31) around said axis (A) .

8. Sterilizing system (1) for sterilizing receptacle closures, comprising:
- a conveying device (3) according to any of the previous claims;
wherein the system (1) is configured to inject a sterilization agent in at least a portion (18) of the tube (7), so that said at least a portion (18) of the tube (7) defines, inside said portion of (18) of the tube (7), a sterilization zone (21) for sterilizing the closures while the closures are being conveyed.

9. System (1) according to claim 8, wherein:
- the system comprises an outer tubular shell (41) enclosing said tube (7) and defining a chamber (42) between said tube (7) and said shell (41);
- the system (1) comprises a plurality of through holes (20) on a lateral wall of said tube (7), said inner surface (10) being defined on said lateral wall and said lateral wall surrounding said axis (A);
- the system (1) is configured to inject said sterilization agent in said sterilization zone (21) fluidically through said chamber (42) and said holes (20).

10. Sterilization system (1) according to claim 8 or 9, wherein:
- the conveying device (3) is according at least to any of claims from 2 to 4;
- the system (1) is configured to inject said sterilization agent in said first tube portion (18), so that said first tube portion (18) defines, inside said first tube portion of (18), said sterilization zone (21);
- the system (1) is configured to inject a drying agent in the second tube portion (19), so that said second tube portion (19) defines, inside said second tube portion (19), a drying zone (22) for drying the closures while the closures are being conveyed.

11. Sterilization system (1) according to claim 9 and 10, wherein the system (1) is configured to inject said drying agent in said drying zone (22) fluidically through said chamber (42) and said holes (20).

12. Sterilization system (1) according to any of claims from 8 to 11, wherein:
- the conveying device (3) is according to claim 7;
- the system (1) is configured to heat said sterilization zone (21) thermally through said first shaft portion (30).

13. Sterilization system (1) according to any of claims from 8 to 12, wherein:
- the conveying device (3) is according to claim 7;
- the system (1) is configured to aspirate at least said sterilizing agent from the sterilization zone (21) fluidically through said second shaft portion (31).

14. Sterilization system (1) according to claim 13, wherein:
- the second shaft portion (31) defines a hole (50) for aspirating at least said sterilization agent, the hole (50) being located at a longitudinal end of the second shaft portion (31), which longitudinal end is faced to the first shaft portion (30).
